# EUROPEAN PATENT SPECIFICATION

(11) **EP 2 571 291 B1**
(45) Date of publication and mention of the grant of the patent: **31.01.2018**
(21) Application number: 10851258.3
(22) Date of filing: 13.08.2010
(51) Int. Cl.: H04W 4/02, H04M 15/00, H04W 4/12, H04W 4/24

(54) **METHOD, TERMINAL AND SYSTEM FOR ACHIEVING DIFFERENTIAL CHARGING OF A FIXED WIRELESS PHONE AMONG CELLS**
VERFAHREN, VORRICHTUNG UND SYSTEM ZUR ERREICHUNG EINER DIFFERENZIERTEN VERGEBÜHRUNG EINES FESTEN DRAHTLOSTELEFONS ZWISCHEN ZELLEN
PROCÉDÉ, TERMINAL ET SYSTÈME PERMETTANT DE RÉALISER UNE FACTURATION DIFFÉRENTE D'UN TÉLÉPHONE FIXE SANS FIL SE TROUVANT PARMI DES CELLULES

(30) Priority: 12.05.2010 CN 201010175882
(43) Date of publication of application: 20.03.2013
(73) Proprietor: ZTE Corporation, Shenzhen, Guangdong 518057 (CN)
(72) Inventor: HE, Feifei, Shenzhen Guangdong 518057 (CN)
(74) Representative: Novagraaf Technologies
(86) International application number: PCT/CN2010/075997
(87) International publication number: WO 2011/140753

(56) References cited:
- WO-A1-99/52316
- WO-A1-2009/134266
- CN-A- 1 429 034
- CN-A- 1 445 946
- US-A1- 2004 224 682
- US-A1- 2009 254 494

## Description

### FIELD OF THE INVENTION

The present disclosure relates to the technical field of wireless communications, and in particular to a method, a terminal and a system for achieving differential charging of a fixed wireless phone among cells.

### BACKGROUND

Currently, fixed wireless phone products emerge as the times require relative to fixed wire phone products to satisfy market demands. In order to occupy the market share of fixed wire phone terminal products in ordinary families, mobile operators have brought forward a variety of preferential charging policies for fixed wireless phones according to different cells. The fees are relatively low compared with that for mobile phone users. However, the problem of charging is a hard nut to crack for mobile operators in the process of popularizing fixed wireless phone products currently. Because of various reasons, different charging policies are utilized for fixed wireless phone products in different cells.

Therefore, to respond to market demands, mobile operators should face the following problems.
1. When a user uses a fixed wireless phone terminal within a range of a different cell, the charging rule for this phone number needs to be changed in real time;
2. If the existing system devices at the network side are changed, it is extremely complicated to update a charging centre of the system devices, which requires increase in the operation cost;
3. It is necessary to ensure that the fixed wireless phone terminal can be used normally in other cells while ensuring a relatively preferential fee standard compared with mobile phone users.

Generally, the following methods are applied to charging a communication terminal according to different cells in the existing technology.
1. A Mobile Switching Centre (MSC)/a Service Switching Point (SSP) triggers a preferential cell charging service when a call of a Mobile Station (MS) is forwarded after being initiated or a call of an MS is forwarded after the MS is called, wherein the MS is an MS which has signed preferential cell charging services based on Customized Applications for Mobile network Enhanced Logic 4 (CAMEL4); the MSC/SSP receives an information list of position changing events which is delivered by a Service Control Point (SCP) according to a preferential cell charging service, monitors information of position changing events during cell switching of the MS in real time and reports the information of position changing events to the SCP.
2. A policy charging decision entity obtains information of a policy charging execution entity, and sends the determined policy charging rules to the policy charging execution entity, or sends the determined policy charging rules to different policy charging execution entities set at different positions to control policy charging.
3. A network locking technology is selected and applied so that a user has to stay in a certain cell.

Using the methods above, terminal position updating information is obtained actively by system devices, and it needs to update the network system devices, which is highly complex with high cost and long development period. In addition, for users, the network locking technology results in bad user experience.

WO 2009/134266 A1 and WO 99/52316 A1 provide respective technical solutions; however, the above mentioned technical problem remains unsolved.

### SUMMARY

The main purpose of the present disclosure is to provide a method, a terminal and a system for achieving differential charging of a fixed wireless phone among cells and having the capability of changing charging standards in real time for fixed wireless phone products which need to distinguish the charging rules of different cells, thus achieving accurate charging.

In order to achieve the purpose above, the technical solution of the present disclosure is realized by a method for achieving differential charging of a fixed wireless phone among cells.

The method comprises a step of a terminal determining whether the terminal position is updated, and a next step of generating position updating information when the terminal position is updated and sending the position updating information to a server, wherein the terminal is a fixed wireless phone terminal. When the server determines, according to a preset charging policy and the position updating information, that the charging policy of the terminal needs to be changed, the server sends request information for changing the charging policy to a charging centre. The charging centre changes the charging policy according to the request information for changing the charging policy from the server, and feeds back the changing result to the server, the server feeding back the charging policy changing result of the charging centre to the terminal.

Before determining whether the terminal position is updated and generating the position updating information when the terminal position is updated, the method may further comprise the terminal obtaining registration information via a registration request when it is turned on or switched among cells. The registration information is a new system parameter message, and the new system parameter message comprises new position information of the terminal.

The step of determining whether the terminal position is updated and generating the position updating information when the terminal position is updated may specifically comprise comparing the new position information of the terminal with the original position information stored in the terminal; when the new position information of the terminal is different from the original position information, replacing the original position information with the new position information, and generating position updating information containing the new position information.

The request information for changing the charging policy may at least comprise number information in need of changing charging policy, a type of charging policy and authentication information.

A terminal for achieving differential charging of a fixed wireless phone among cells comprises a determination operation module, configured to determine whether a terminal position is updated and generate position updating information when the terminal position is updated. The terminal also comprises a text message receiving and sending module connected with the determination operation module and a server, respectively. The server is connected with a charging centre. The text message receiving and sending module is configured to send the position updating information to the server so that when the server determines, according to a preset charging policy and the position updating information, that the charging policy of the terminal needs to be changed, it sends request information for changing the charging policy to a charging centre, wherein the terminal is a fixed wireless phone terminal.

The text message receiving and sending module is further configured to receive a feedback result, which is forwarded by the server, and the feedback result explains the charging policy has been changed by the charging centre.

The terminal for achieving differential charging of a fixed wireless phone among cells may further comprise an information registration module, connected with the determination operation module and configured to obtain registration information via a registration request when the terminal is turned on or switched among cells; the registration information is a new system parameter message; the new system parameter message comprises new position information of the terminal.

The determination operation module may comprise a position judging unit configured to compare the new position information of the terminal with the original position information stored in the terminal; and a text message generating unit configured to replace the original position information with the new position information when the position information of the terminal is different from the original position information, and generate position updating information containing the new position information.

A system for achieving differential charging of a fixed wireless phone among cells comprises a terminal, a server connected with the terminal and a charging centre connected with the server. In the system, the terminal is configured to determine whether a terminal position is updated, generate position updating information when the terminal position is updated and send the position updating information to the server. Further, the server is configured to, when it determines, according to a preset charging policy and the position updating information, that the charging policy of the terminal needs to be changed, send request information for changing the charging policy to the charging centre and feed back the charging policy changing result of the charging centre to the terminal. The charging centre is configured to change the charging policy according to the request information for changing the charging policy from the server, and feed back the changing result to the server.

The terminal may be further configured to: receive a feedback result, which is forwarded by the server, explaining the charging policy has been changed by the charging centre, and obtain registration information via a registration request when the terminal is turned on or switched among cells; the registration information is a new system parameter message, and the new system parameter message comprises new position information of the terminal.

The server may be a text message centre server.

According to the present disclosure position updating information is sent to a server actively via a fixed wireless phone terminal. The server parses the position updating information and determines whether the charging policy of the terminal (number) needs to be changed. If yes, the server sends a request for changing the charging policy to a charging centre which changes the charging policy of the terminal (number) in real time to charge accurately, thus changing the charging policies (standards) in real time for fixed wireless phone products which need to distinguish the charging rules of different cells, solving the problem of charging for mobile operators in the process of popularizing fixed wireless phone products. The existing devices such as the server and the charging centre etc. are fully utilized to effectively satisfy the marketing strategies of operators and increase the satisfaction of users with low operation cost.

### BRIEF DESCRIPTION OF THE DRAWINGS

Drawings described herein are provided for further understanding of the disclosure and form one part of the application, exemplary embodiments of the disclosure and descriptions thereof are used for explaining the disclosure and form no improper limit to the disclosure. In the drawings:
Fig. 1 is a flowchart illustrating an embodiment of a method for achieving differential charging of a fixed wireless phone among cells in the present disclosure;
Fig. 2 is a flowchart illustrating another embodiment of a method for achieving differential charging of a fixed wireless phone among cells in the present disclosure;
Fig. 3 is a structural diagram illustrating an embodiment of a terminal for achieving differential charging of a fixed wireless phone among cells in the present disclosure;
Fig. 4 is a structural diagram illustrating another embodiment of a terminal for achieving differential charging of a fixed wireless phone among cells in the present disclosure;
Fig. 5 is a structural diagram illustrating a determination operation module in another embodiment of a terminal for achieving differential charging of a fixed wireless phone among cells in the present disclosure; and
Fig. 6 is a structural diagram illustrating a system for achieving differential charging of a fixed wireless phone among cells in an embodiment of the present disclosure.

### DETAILED DESCRIPTION

To make the technical solution of the present disclosure clearer, further description is given as below with reference to the attached drawings.

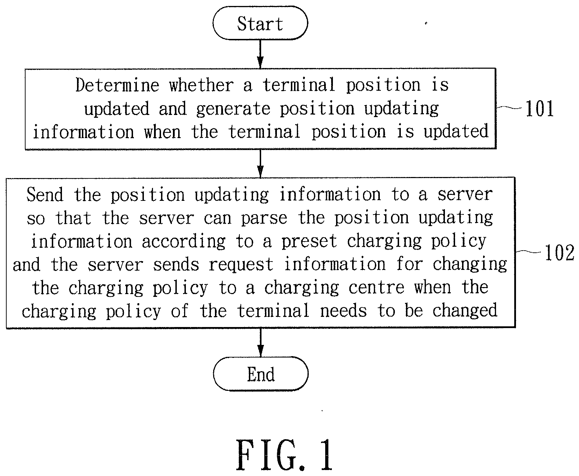

Fig. 1 shows a flowchart illustrating an embodiment of a method for achieving differential charging of a fixed wireless phone among cells in the present disclosure.

As shown in Fig. 1, a method for achieving differential charging of a fixed wireless phone among cells in an embodiment of the present disclosure comprises the following steps:
Step 101: determining whether a terminal position is updated and generating position updating information when the terminal position is updated.

A fixed wireless phone terminal is made as an example, when the fixed wireless phone terminal is switched from one cell to another, the position of the terminal is changed. The new position information of the terminal is compared with the original position information stored in the terminal. When the new position information of the terminal is different from the original position information, the original position information is replaced with the new position information, and position updating information containing the new position information is generated.

Step 102: sending the position updating information to a server. When the server determines, according to a preset charging policy and the position updating information, that the charging policy of the terminal needs to be changed, it sends request information for changing the charging policy to a charging centre.

In this step, after generating the position updating information, the terminal sends the position updating information to the server and the server parses the received position updating information such as a System Identity (SID) and a Network Identity (NID) in the server etc. and is able to determine a position information parameter of the cell in which the terminal is located. At the same time, the server is provided with a charging policy of an operator for a fixed wireless phone terminal user in advance. The server determines whether the charging policy of the fixed wireless phone terminal needs to be changed based on the charging policy preset by the operator. If the position is determined to be changed and the charging policy needs to be changed, the server will notify the charging centre automatically, i.e. the server sends request information for changing the charging policy to the charging centre.

The request information for changing the charging policy at least comprises number information needing to change charging policy, a type of charging policy, i.e. which charging type of the charging policy is changed into and authentication information.

The embodiment of the present disclosure sends position updating information to a server actively via a fixed wireless phone terminal. The server parses the position updating information and determines whether the charging policy of the terminal (number) needs to be changed. If yes, the server sends a request for changing the charging policy to a charging centre which changes the charging policy of the terminal (number) in real time to charge accurately, thus changing the charging policies in real time for fixed wireless phone products which need to distinguish the charging rules of different cells, and solving the problem of charging for mobile operators in the process of popularizing fixed wireless phone products. The existing devices such as the text message centre server and the charging centre etc. are fully utilized to effectively satisfy the marketing strategies of operators and increase the satisfaction of users with low operation cost.

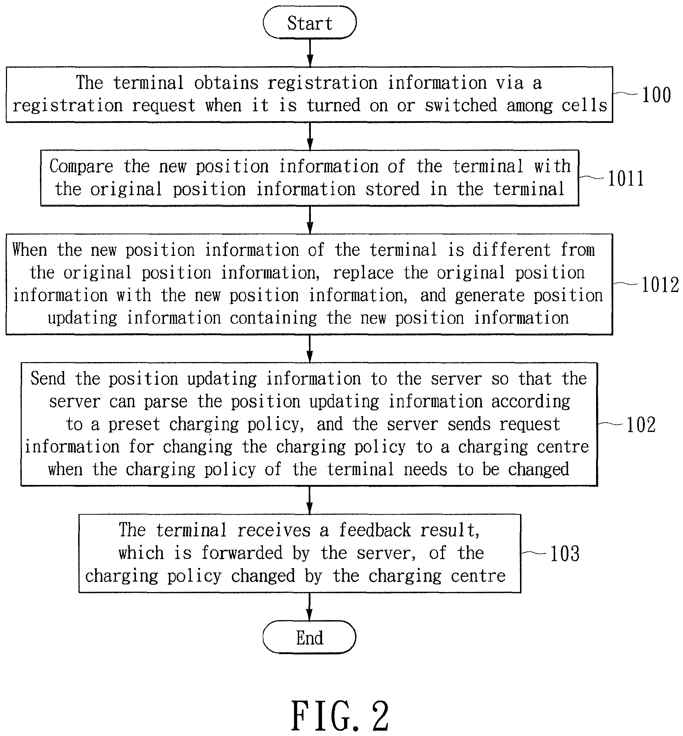

Fig. 2 is a flowchart illustrating another embodiment of a method for achieving differential charging of a fixed wireless phone among cells in the present disclosure.

As shown in Fig. 2, before Step 101, the method for achieving differential charging of a fixed wireless phone among cells in another embodiment of the present disclosure further comprises:
Step 100: the terminal obtains registration information via a registration request when it is turned on or switched among cells;

In such case that the terminal is turned on or switched among cells etc., it needs to initiate a registration request over again and obtain registration information of a new system parameter message which comprises new position information of the terminal.

After Step 102, the following step is comprised:
Step 103: the terminal receives a feedback result, which is forwarded by the server, and the result explains that the charging policy has been changed by the charging centre.

In this step, the feedback result is changing information sent to the server after the charging policy is changed by the charging centre. After receiving the request information sent by the server, the charging centre performs changing operation for the charging policy in real time according to the request information and notifies the changing result, i.e. the changed charging policy, to the server after successful changing. The server is responsible for notifying the changing result to the fixed wireless phone terminal via a text message.

Step 101 specifically comprises:
Step 1011: compare the new position information of the terminal with the original position information stored in the terminal;
Step 1012: when the new position information of the terminal is different from the original position information, the method is to replace the original position information with the new position information, and to generate position updating information containing the new position information.

In this embodiment, the terminal is a fixed wireless phone terminal. When the fixed wireless phone terminal is switched from one cell to another, the position of the terminal is changed, the method is performed to compare the new position information of the terminal with the original position information stored in the terminal. When the new position information of the terminal is different from the original position information, the original position information is replaced with the new position information, and position updating information containing the new position information is generated.

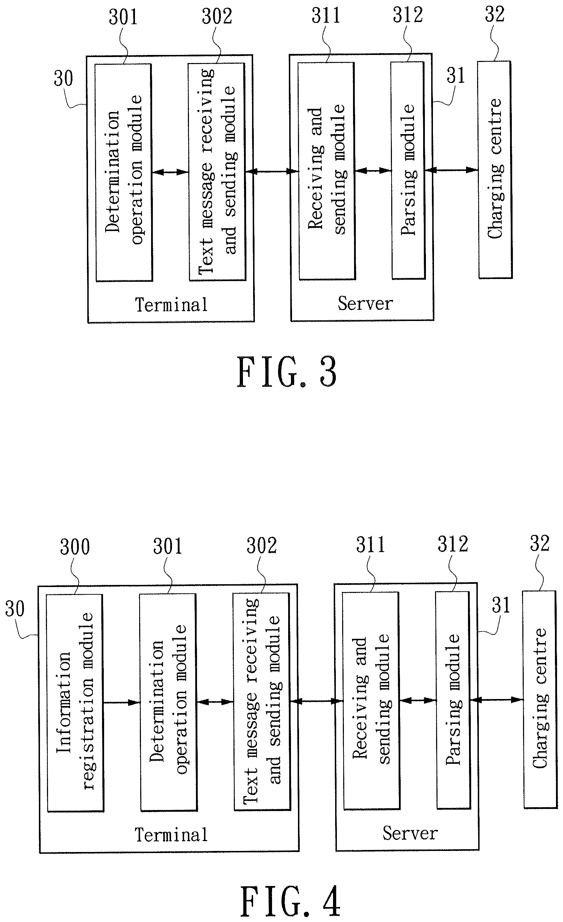

Fig. 3 is a structural diagram illustrating an embodiment of a terminal for achieving differential charging of a fixed wireless phone among cells in the present disclosure.

As shown in Fig. 3, a terminal 30 for achieving differential charging of a fixed wireless phone among cells in an embodiment of the present disclosure comprises:
a determination operation module 301, configured to determine whether the position of terminal 30 is updated and to generate position updating information when the position of terminal 30 is updated; and
a text message receiving and sending module 302, connected with the determination operation module 301 and a server 31, respectively. The server 31 is connected with a charging centre 32.

Further, the server 31 in this embodiment of the present disclosure comprises a receiving and sending module 311 and a parsing module 312 connected with the receiving and sending module 311, wherein the text message receiving and sending module 302 is connected with the receiving and sending module 311 in the server 31 and the server 31 is connected with the charging centre 32 via the parsing module 312.

The text message receiving and sending module 302 is further configured to send the position updating information to the receiving and sending module 311 in the server 31. The receiving and sending module 311 sends the position updating information to the parsing module 312 so that the parsing module 312 in the server 31 can parse the position updating information, and when determining, according to a preset charging policy and the parsed position updating information, that the charging policy of the terminal 30 needs to be changed, the parsing module 312 of the server 31 sends request information for changing the charging policy to the charging centre 32.

The request information at least comprises number information needing to change charging policy, a type of charging policy, i.e. which charging type of the charging policy is changed into, and authentication information.

The text message receiving and sending module 302 is further configured to receive a feedback result, which is forwarded by the server 31, explaining the charging policy is changed by the charging centre. The feedback result is a changing result sent to the server 31 after the charging policy is changed by the charging centre 32. After receiving the request information sent by the server 31, the charging centre 32 performs changing operation for the charging policy in real time according to the request information and notifies the changing result, i.e. the changed charging policy to the server 31 after successful changing. The server 31 is responsible for notifying the changing result to the fixed wireless phone terminal 30 via a text message.

In this embodiment, the server 31 is a text message centre server preferably.

Fig. 4 is a structural diagram illustrating an embodiment of another terminal for achieving differential charging of a fixed wireless phone among cells in the present disclosure.

As shown in Fig. 4, based on the terminal 30 of the aforementioned embodiment, a terminal 30 for achieving differential charging of a fixed wireless phone among cells in another embodiment of the present disclosure further comprises:
an information registration module 300, connected with the determination operation module and configured to obtain registration information via a registration request when the terminal 30 is turned on or switched among cells; the registration information is a new system parameter message; the new system parameter message comprises new position information of the terminal 30.

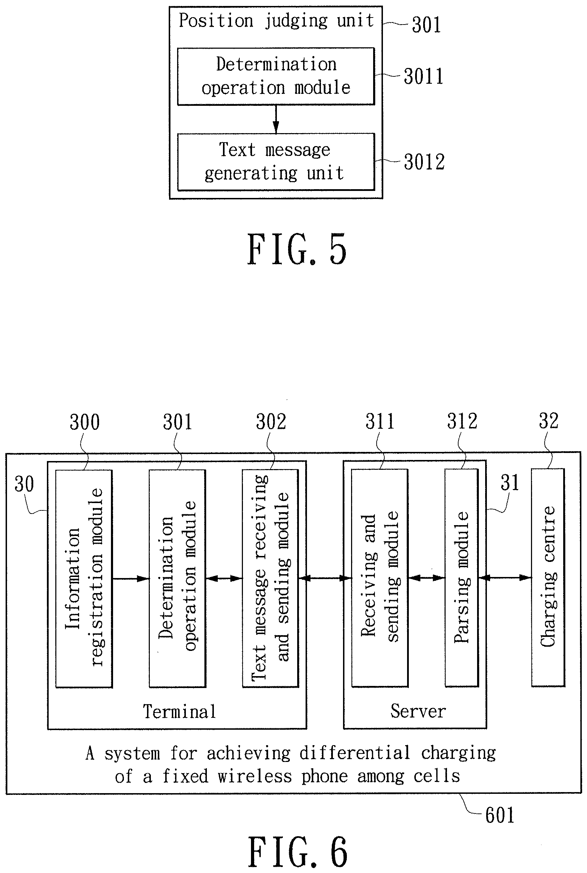

As shown in Fig. 5, in this embodiment, the determination operation module 301 specifically comprises:
a position judging unit 3011, configured to compare the new position information of the terminal 30 with the original position information stored in the terminal 30; and
a text message generating unit 3012, connected with the position judging unit 3011 and configured to replace the original position information with the new position information when the position information of the terminal 30 is different from the original position information, and to generate position updating information containing the new position information. The position updating information is sent to the server 31 by the text message receiving and sending module 302.

Fig. 6 is a structural diagram illustrating a system for achieving differential charging of a fixed wireless phone among cells in an embodiment of the present disclosure.

As shown in Fig. 6, a system 601 for achieving differential charging of a fixed wireless phone among cells in an embodiment of the present disclosure comprises a terminal 30, a server 31 connected with the terminal 30 and a charging centre 32 connected with the server 31.

In the system 601, the terminal 30 is configured to determine whether a terminal 30 position is updated, generate position updating information when the terminal 30 position is updated and send the position updating information to the server 31. In this embodiment, the terminal 30 is a fixed wireless phone terminal preferably.

The server 31 is configured to, when it determines, according to a preset charging policy and the position updating information of the terminal 30, that the charging policy of the terminal 30 needs to be changed, send request information for changing the charging policy to the charging centre 32 and feed back the charging policy changing result of the charging centre 32 to the terminal 30. In this embodiment, the server 31 comprises a receiving and sending module 311 and a parsing module 312.

The charging centre 32 is configured to change the charging policy according to the request information for changing the charging policy from the server 31, and feed back the changing result to the server 31.

In this embodiment, the terminal 30 is further configured to receive a feedback result, which is forwarded by the server 31, explaining the charging policy has been changed by the charging centre, and to obtain registration information via a registration request when the terminal 30 is turned on or switched among cells. The registration information is a new system parameter message, and the new system parameter message comprises new position information of the terminal 30.

The terminal 30 in this embodiment has the same internal structure as the terminal 30 in the aforementioned embodiments, which will not be repeated here.

In this embodiment, the server 31 is a text message centre server preferably.

According to this embodiment of the present disclosure, position updating information is sent to a server 31 actively via a fixed wireless phone terminal 30. The server 31 parses the updating information and determines according to a preset charging policy whether the charging policy of the terminal number needs to be changed. If yes, the server 31 sends a request for changing the charging policy to a charging centre 32 and the charging centre 32 changes the charging policy of the terminal number in real time to charge accurately, thus changing the charging policies in real time for fixed wireless phone products which need to distinguish the charging rules of different cells, solving the problem of charging for mobile operators in the process of popularizing fixed wireless phone products. The existing devices such as the server 31 and the charging centre 32 etc. are fully utilized to effectively satisfy the marketing strategies of operators and increase the satisfaction of users with low operation cost.

What are described above are only preferred embodiments of the present disclosure and are not intended to limit the patent scope of the present disclosure. Any equivalent structural or process flow modifications that are made on the basis of the specification and the attached drawings of the present disclosure, or any direct or indirect applications in other related technical fields shall also fall within the scope of patent protection of the present disclosure.

## Claims

1. A method for achieving differential charging of a fixed wireless phone among cells, **characterized by** comprising:
a terminal determining (101) whether the terminal position is updated, generating position updating information when the terminal position is updated and sending (102) the position updating information to a server, wherein the terminal is a fixed wireless phone terminal;
when the server determines, according to a preset charging policy and the position updating information, that the charging policy of the terminal needs to be changed, the server sending request information for changing the charging policy to a charging centre;
wherein the charging centre changes the charging policy according to the request information for changing the charging policy from the server, and feeds back the changing result to the server, the server feeding back the charging policy changing result of the charging centre to the terminal.

2. The method according to claim 1, **characterized in that** after the server sends the request information for changing the charging policy to the charging centre, the method further comprises:
the terminal receiving (103) a feedback result, which is forwarded by the server, explaining the charging policy has been changed by the charging centre.

3. The method according to claim 1, **characterized in that** before determining whether the terminal position is updated and generating the position updating information when the terminal position is updated, the method further comprises:
the terminal obtaining registration information via a registration request when the terminal is turned on or switched among cells;
wherein, the registration information is a new system parameter message, and the new system parameter message comprises new position information of the terminal.

4. The method according to claim 3, **characterized in that** the step of determining whether the terminal position is updated and generating the position updating information when the terminal position is updated comprises:
comparing (1011) the new position information of the terminal with original position information stored in the terminal;
when the new position information of the terminal is different from the original position information, replacing (1012) the original position information with the new position information, and generating position updating information containing the new position information.

5. The method according to claim 1, **characterized in that** the request information for changing the charging policy at least comprises:
number information needing to change charging policy, a type of charging policy and authentication information.

6. A terminal (30) for achieving differential charging of a fixed wireless phone among cells, **characterized by** comprising:
a determination operation module (301), configured to determine whether a terminal position is updated and generate position updating information when the terminal position is updated; and
a text message receiving and sending module (302), connected with the determination operation module, wherein the terminal is a fixed wireless phone terminal; and
wherein the text message receiving and sending module is configured to send the position updating information to a server so that the server may determine, according to a preset charging policy and the position updating information, that the charging policy of the terminal needs to be changed and send request information for changing the charging policy to a charging centre;
wherein the text message receiving and sending module is further configured to receive a feedback result, which is forwarded by the server, explaining the charging policy has been changed by the charging centre.

7. The terminal according to claim 6, **characterized by** further comprising:
an information registration module (300), connected with the determination operation module and configured to obtain registration information via a registration request when the terminal is turned on or switched among cells;
wherein the registration information is a new system parameter message, and the new system parameter message comprises new position information of the terminal.

8. The terminal according to claim 7, **characterized in that** the determination operation module (3011) comprises:
a position judging unit (301), configured to compare the new position information of the terminal with original position information stored in the terminal; and
a text message generating unit (3012), configured to replace the original position information with the new position information when the position information of the terminal is different from the original position information, and generate position updating information containing the new position information.

9. A system (601) for achieving differential charging of a fixed wireless phone among cells, **characterized by** comprising a terminal (30), a server (31) connected with the terminal and a charging centre (32) connected with the server, wherein:
the terminal is configured to determine whether the position of the terminal is updated, generate position updating information when the position of the terminal is updated and send the position updating information to the server;
the server is configured to, when the server determines, according to a preset charging policy and the position updating information, that the charging policy of the terminal needs to be changed, send request information for changing the charging policy to the charging centre and feed back the charging policy changing result of the charging centre to the terminal; and
the charging centre is configured to change the charging policy according to the request information for changing the charging policy from the server, and feed back the changing result to the server; wherein the terminal is a fixed wireless phone terminal.

10. The system according to claim 9, **characterized in that** the terminal is further configured to:
receive a feedback result, which is forwarded by the server, explaining the charging policy has been changed by the charging centre, and
obtain registration information via a registration request when the terminal is turned on or switched among cells;
wherein the registration information is a new system parameter message, and the new system parameter message comprises new position information of the terminal.

11. The system according to claim 9 or 10, **characterized in that** the server is a text message centre server.

## Patentansprüche

1. Verfahren zum Erreichen einer differenzierten Gebührenerhebung eines stationären schnurlosen Telefons zwischen Zellen, **dadurch gekennzeichnet, dass** es umfasst:
Bestimmen (101) durch ein Endgerät, ob die Position des Endgeräts aktualisiert ist, Generieren von Positionsaktualisierungsinformationen, wenn die Position des Endgeräts aktualisiert wird, und Senden (102) von Positionsaktualisierungsinformationen an einen Server, wobei das Endgerät ein stationäres schnurloses Telefonendgerät ist;
wenn der Server nach einer vorgegebenen Gebührenpolitik und den Positionsaktualisierungsinformationen feststellt, dass die Gebührenpolitik des Endgeräts geändert werden muss, Senden durch den Server von Anfrageinformationen zum Ändern der Gebührenpolitik an eine Gebührenerhebungsstelle;
wobei die Gebührenerhebungsstelle die Gebührenpolitik gemäß den Anfrageinformationen zum Ändern der Gebührenpolitik von dem Server ändert und das Ergebnis der Änderungen an den Server zurückmeldet, wobei der Server das Ergebnis der Änderung der Gebührenpolitik der Gebührenerhebungsstelle an das Endgerät zurückmeldet.

2. Verfahren nach Anspruch 1, **dadurch gekennzeichnet, dass**, nachdem der Server die Anfrageinformationen zum Ändern der Gebührenpolitik an die Gebührenerhebungsstelle sendet, das Verfahren außerdem umfasst:
dass das Endgerät ein Rückmeldeergebnis empfängt (103), das vom Server weitergeleitet wird, in dem erklärt wird, dass die Gebührenpolitik von der Gebührenerhebungsstelle geändert wurde.

3. Verfahren nach Anspruch 1, **dadurch gekennzeichnet, dass**, bevor bestimmt wird, ob die Position des Endgeräts aktualisiert ist und die Positionsaktualisierungsinformationen generiert werden, wenn die Position des Endgeräts aktualisiert wurde, das Verfahren außerdem umfasst:
dass das Endgerät über eine Registrierungsanfrage Registrierungsinformationen erhält, wenn das Endgerät eingeschaltet wird oder zwischen Zellen umschaltet;
wobei die Registrierungsinformationen eine neue Parameternachricht des Systems sind, und die neue Parameternachricht des Systems neue Positionsinformationen des Endgeräts umfasst.

4. Verfahren nach Anspruch 3, **dadurch gekennzeichnet, dass** der Schritt des Bestimmens, ob die Position des Endgeräts aktualisiert ist, und des Generierens der Positionsaktualisierungsinformationen, wenn die Position des Endgeräts aktualisiert wurde, umfasst:
Vergleichen (1011) der neuen Positionsinformationen des Endgeräts mit den ursprünglich im Endgerät gespeicherten Positionsinformationen;
wenn die neuen Positionsinformationen des Endgeräts von den ursprünglichen Positionsinformationen abweichen, Austauschen (1012) der ursprünglichen Positionsinformationen durch die neuen Positionsinformationen und Generieren von Positionsaktualisierungsinformationen, die die neuen Positionsinformationen enthalten.

5. Verfahren nach Anspruch 1, **dadurch gekennzeichnet, dass** die Anfrageinformationen zum Ändern der Gebührenpolitik mindestens umfassen:
Informationen zur Nummer, die eine Änderung der Gebührenpolitik benötigt, einen Gebührenpolitikstyp und Authentifizierungsinformationen.

6. Endgerät (30) zum Erreichen einer differenzierten Gebührenerhebung eines stationären schnurlosen Telefons zwischen Zellen, **dadurch gekennzeichnet, dass** es umfasst:
ein Bestimmungsoperationsmodul (301), das so konfiguriert ist, dass es bestimmt, ob eine Position des Endgeräts aktualisiert ist, und Positionsaktualisierungsinformationen generiert, wenn die Position des Endgeräts aktualisiert wird; und
ein Modul zum Empfangen und Senden von Textnachrichten (302), das mit dem Bestimmungsoperationsmodul verbunden ist, wobei das Endgerät ein stationäres schnurloses Telefonendgerät ist; und
wobei das Modul zum Empfangen und Senden von Textnachrichten so konfiguriert ist, dass es Positionsaktualisierungsinformationen an einen Server sendet, so dass der Server gemäß einer vorgegebenen Gebührenpolitik und den Positionsaktualisierungsinformationen bestimmen kann, dass die Gebührenpolitik des Endgeräts geändert werden muss, und Anfrageinformationen zum Ändern der Gebührenpolitik an eine Gebührenerhebungsstelle sendet;
wobei das Modul zum Empfangen und Senden von Textnachrichten außerdem so konfiguriert ist, dass es eine Ergebnisrückmeldung erhält, die vom Server weitergeleitet wird, in der erklärt wird, dass die Gebührenpolitik von der Gebührenerhebungsstelle geändert wurde.

7. Endgerät nach Anspruch 6, **dadurch gekennzeichnet, dass** es außerdem umfasst:
ein Informationsregistrierungsmodul (300), das mit dem Bestimmungsoperationsmodul verbunden und so konfiguriert ist, dass es über eine Registrierungsanfrage Registrierungsinformationen erhält, wenn das Endgerät eingeschaltet wird oder zwischen Zellen umschaltet;
wobei die Registrierungsinformationen eine neue Parameternachricht des Systems sind, und die neue Parameternachricht des Systems neue Positionsinformationen des Endgeräts umfasst.

8. Endgerät nach Anspruch 7, **dadurch gekennzeichnet, dass** das Bestimmungsoperationsmodul (3011) umfasst:
eine Positionsbeurteilungseinheit (301), die so konfiguriert ist, dass sie die neuen Positionsinformationen des Endgeräts mit den ursprünglichen im Endgerät gespeicherten Positionsinformationen vergleicht; und
eine Einheit zum Generieren von Textnachrichten (3012), die so konfiguriert ist, dass sie die ursprünglichen Positionsinformationen durch die neuen Positionsinformationen ersetzt, wenn die Positionsinformationen des Endgeräts von den ursprünglichen Positionsinformationen abweichen, und Positionsaktualisierungsinformationen generiert, die die neuen Positionsinformationen enthalten.

9. System (601) zum Erreichen einer differenzierten Gebührenerhebung eines stationären schnurlosen Telefons zwischen Zellen, **dadurch gekennzeichnet, dass** es ein Endgerät (30), einen mit dem Endgerät verbundenen Server (31) und eine mit dem Server verbundene Gebührenerhebungsstelle (32) umfasst, wobei:
das Endgerät so konfiguriert ist, dass es bestimmt, ob die Position des Endgeräts aktualisiert ist, Positionsaktualisierungsinformationen generiert, wenn die Position des Endgeräts aktualisiert wurde, und die Positionsaktualisierungsinformationen an den Server sendet;
der Server so konfiguriert ist, dass, wenn der Server gemäß einer vorgegebenen Gebührenpolitik und den Positionsaktualisierungsinformationen bestimmt, dass die Gebührenpolitik des Endgeräts geändert werden muss, Anfrageinformationen zum Ändern der Gebührenpolitik an die Gebührenerhebungsstelle sendet und das Ergebnis des Änderns der Gebührenpolitik durch die Gebührenerhebungsstelle an das Endgerät zurückmeldet; und
die Gebührenerhebungsstelle so konfiguriert ist, dass sie die Gebührenpolitik gemäß den Anfrageinformationen zum Ändern der Gebührenpolitik vom Server ändert und das Ergebnis der Änderung an den Server zurückmeldet; wobei das Endgerät ein stationäres schnurloses Telefonendgerät ist.

10. System nach Anspruch 9, **dadurch gekennzeichnet, dass** das Endgerät außerdem so konfiguriert ist, dass:
es ein Rückmeldeergebnis empfängt, das vom Server weitergeleitet wird und erklärt, dass die Gebührenpolitik von der Gebührenerhebungsstelle geändert wurde, und
es über eine Registrierungsanfrage Registrierungsinformationen erhält, wenn das Endgerät eingeschaltet wird oder zwischen Zellen umschaltet;
wobei die Registrierungsinformationen eine neue Parameternachricht des Systems sind, und die neue Parameternachricht des Systems neue Positionsinformationen des Endgeräts umfasst.

11. System nach Anspruch 9 oder 10, **dadurch gekennzeichnet, dass** der Server ein Server einer Textnachrichtenstelle ist.

## Revendications

1. Procédé pour l'obtention d'une tarification différentielle d'un téléphone sans fil fixe parmi des cellules, **caractérisé en ce qu'**il comprend :
la détermination (101), par un terminal, que la position du terminal est mise à jour, la génération d'informations de mise à jour de position quand la position du terminal est mise à jour et l'envoi (102) des informations de mise à jour de position à un serveur, dans lequel le terminal est un terminal de téléphone sans fil fixe ;
quand le serveur détermine, en fonction d'une politique de tarification prédéfinie et des informations de mise à jour de position, que la politique de tarification du terminal a besoin d'être changée, le serveur envoyant des informations de demande pour changer la politique de tarification à un centre de tarification ;
dans lequel le centre de tarification change la politique de tarification en fonction des informations de demande pour changer la politique de tarification à partir du serveur et renvoie le résultat du changement au serveur, le serveur renvoyant le résultat de changement de politique de tarification du centre de tarification au terminal.

2. Procédé selon la revendication 1, **caractérisé en ce que**, après que le serveur envoie les informations de demande pour changer la politique de tarification au centre de tarification, le procédé comprend en outre :
la réception (103) par le terminal d'un résultat de rétroaction, qui est transmis par le serveur, expliquant que la politique de tarification a été changée par le centre de tarification.

3. Procédé selon la revendication 1, **caractérisé en ce que**, avant la détermination que la position du terminal est mise à jour et la génération des informations de mise à jour de position quand la position du terminal est mise à jour, le procédé comprend en outre :
l'obtention par le terminal d'informations d'enregistrement par le biais d'une demande d'enregistrement quand le terminal est allumé ou commuté entre des cellules ;
dans lequel les informations d'enregistrement sont un nouveau message de paramètres de système et le nouveau message de paramètres de système comprend de nouvelles informations de position du terminal.

4. Procédé selon la revendication 3, **caractérisé en ce que** l'étape de détermination que la position du terminal est mise à jour et de génération des informations de mise à jour de position quand la position du terminal est mise à jour comprend :
la comparaison (1011) des nouvelles informations de position du terminal avec des informations de position originales stockées dans le terminal ;
quand les nouvelles informations de position du terminal sont différentes des informations de position originales, le remplacement (1012) des informations de position originales par les nouvelles informations de position et la génération d'informations de mise à jour de position contenant les nouvelles informations de position.

5. Procédé selon la revendication 1, **caractérisé en ce que** les informations de demande pour changer la politique de tarification comprennent au moins :
des informations de numéro nécessitant de changer une politique de tarification, un type de politique de tarification et des informations d'authentification.

6. Terminal (30) pour l'obtention d'un chargement différentiel d'un téléphone sans fil fixe parmi des cellules, **caractérisé en ce qu'**il comprend :
un module d'opération de détermination (301) configuré pour déterminer si une position du terminal est mise à jour et générer des informations de mise à jour de position quand la position du terminal est mise à jour ; et
un module de réception et d'envoi de message de texte (302) connecté au module d'opération de détermination, dans lequel le terminal est un téléphone sans fil fixe ; et
dans lequel le module de réception et d'envoi de message de texte est configuré pour envoyer les informations de mise à jour de position à un serveur de manière que le serveur puisse déterminer, en fonction d'une politique de tarification prédéfinie et des informations de mise à jour de position, que la politique de tarification du terminal a besoin d'être changée et envoie des informations de demande pour changer la politique de tarification à un centre de tarification ;
dans lequel le module de réception et d'envoi de message de texte est configuré en outre pour recevoir un résultat de rétroaction, qui est transmis par le serveur, expliquant que la politique de tarification a été changée par le centre de tarification.

7. Terminal selon la revendication 6, **caractérisé en ce qu'**il comprend en outre :
un module d'enregistrement d'informations (300) connecté au module d'opération de détermination et configuré pour obtenir des informations d'enregistrement par le biais d'une demande d'enregistrement quand le terminal est allumé ou commuté entre des cellules ;
dans lequel les informations d'enregistrement sont un nouveau message de paramètres de système et le nouveau message de paramètres de système comprend de nouvelles informations de position du terminal.

8. Terminal selon la revendication 7, **caractérisé en ce que** le module d'opération de détermination (3011) comprend :
une unité de jugement de position (301) configurée pour comparer les nouvelles informations de position du terminal avec des informations de position originales stockées dans le terminal ; et
une unité de génération de message de texte (3012) configurée pour remplacer les informations de position originales par les informations de position quand les nouvelles informations de position du terminal sont différentes des informations de position originales et générer des informations de mise à jour de position contenant les nouvelles informations de position.

9. Système (601) pour l'obtention d'un chargement différentiel d'un téléphone sans fil fixe parmi des cellules, **caractérisé en ce qu'**il comprend un terminal (30), un serveur (31) connecté au terminal et un centre de tarification (32) connecté au serveur, dans lequel :
le terminal est configuré pour déterminer si la position du terminal est mise à jour, générer des informations de mise à jour de position quand la position du terminal est mise à jour et envoyer les informations de mise à jour de position au serveur ;
le serveur est configuré pour, quand le serveur détermine, en fonction d'une politique de tarification prédéfinie et des informations de mise à jour de position, que la politique de tarification du terminal a besoin d'être changée, envoyer les informations de demande pour changer la politique de tarification au centre de tarification et renvoyer le résultat de changement de politique de tarification du centre de tarification au terminal ; et
le centre de tarification est configuré pour changer la politique de tarification en fonction des informations de demande pour changer la politique de tarification à partir du serveur et renvoyer le résultat du changement au serveur ; dans lequel le terminal est un téléphone sans fil fixe.

10. Système selon la revendication 9, **caractérisé en ce que** le terminal est configuré en outre pour :
recevoir un résultat de rétroaction, qui est transmis par le serveur, expliquant que la politique de tarification a été changée par le centre de tarification, et
obtenir des informations d'enregistrement par le biais d'une demande d'enregistrement quand le terminal est allumé ou commuté entre des cellules ;
dans lequel les informations d'enregistrement sont un nouveau message de paramètres de système et le nouveau message de paramètres de système comprend de nouvelles informations de position du terminal.

11. Système selon la revendication 9 ou 10, **caractérisé en ce que** le serveur est un serveur de centre de messages de texte.
